# EUROPEAN PATENT APPLICATION

(11) **EP 3 705 810 A1**
(43) Date of publication of application: **09.09.2020**
(21) Application number: 18873318.2
(22) Date of filing: 26.09.2018
(51) Int. Cl.: F25B 13/00, F24F 11/86

(54) **AIR CONDITIONER**

(30) Priority: 30.10.2017 JP 2017209493
(71) Applicant: Daikin Industries, Ltd., Osaka-shi, Osaka 530-8323 (JP)
(72) Inventor: ITOU, Hiroshi, Osaka-shi Osaka 530-8323 (JP); NAKATA, Takahiro, Osaka-shi Osaka 530-8323 (JP); OKA, Seiji, Osaka-shi Osaka 530-8323 (JP); ASHIZAWA, Tomoharu, Osaka-shi Osaka 530-8323 (JP)
(74) Representative: Hoffmann Eitle
(86) International application number: PCT/JP2018/035621
(87) International publication number: WO 2019/087621

(57) **Abstract**

An air conditioner comprising: a compressor in which an operating frequency is changeable; an outdoor heat exchanger; an indoor heat exchanger; and a switching mechanism configured to reversibly change a flow of a refrigerant in a refrigerant circuit. When activating the compressor in accordance with a start of the cooling operation or heating operation, the air conditioner is configured to perform a refrigerant discharge activation operation that operates the compressor at a first target frequency with the switching mechanism switched to a reverse cycle for a predetermined time and then changes the operating frequency of the compressor from the first target frequency and operate the compressor at a second target frequency that is lower than the first target frequency. When performing the refrigerant discharge activation operation, a first change rate at which the operating frequency is decreased from the first target frequency to the second target frequency is greater than a second change rate at which the operating frequency of the compressor is decreased in the heating operation.

## Description

### TECHNICAL FIELD

The present disclosure relates to an air conditioner.

### BACKGROUND ART

When starting a cooling operation or a heating operation, a typical air conditioner executes control that switches a four-way switching valve to a reverse cycle for a predetermined time from activation of a compressor to limit generation of a so-called stagnation phenomenon, that is, dissolution and accumulation of a liquid refrigerant in lubricant oil of the compressor (for example, refer to Patent Document 1).

### PRIOR ART DOCUMENT

### Patent Document

Patent Document 1: Japanese Laid-Open Patent Publication No. 63-129257

### SUMMARY OF THE INVENTION

### Problems that the Invention is to Solve

In a typical air conditioner, the frequency of the compressor is changed at a constant rate during the reverse cycle. More specifically, during the reverse cycle, the change rate at which the operating frequency of the compressor is increased is the same as the change rate at which the operating frequency of the compressor is decreased. When the reverse cycle operation is changed to a normal operation such as a cooling operation or a heating operation, it is desirable that pressure be equalized between switch ports of the four-way switching valve that are connected to an outdoor heat exchanger and an indoor heat exchanger. However, the four-way switching valve is not provided with sufficient time to equalize the pressure and is actuated in a non-equalized pressure state. This increases shock noise when switching the four-way switching valve.

It is an objective of the present disclosure to provide an air conditioner that reduces shock noise of a switching mechanism, which reversibly switches a refrigerant circuit, generated when starting the heating operation or the cooling operation.

### Means for Solving the Problems

An air conditioner according to the present disclosure includes a compressor in which an operating frequency is changeable, an outdoor heat exchanger, an indoor heat exchanger, and a switching mechanism configured to reversibly change a flow of a refrigerant in a refrigerant circuit between during a cooling operation and during a heating operation. When activating the compressor in accordance with a start of the cooling operation or the heating operation, the air conditioner is configured to perform a refrigerant discharge activation operation that operates the compressor at a first target frequency with the switching mechanism switched to a reverse cycle for a predetermined time and then changes the operating frequency of the compressor from the first target frequency and operates the compressor at a second target frequency that is lower than the first target frequency. When performing the refrigerant discharge activation operation, a first change rate at which the operating frequency is decreased from the first target frequency to the second target frequency is greater than a second change rate at which the operating frequency of the compressor is decreased in the cooling operation or the heating operation.

This configuration extends the period in which the compressor is operated at the second target frequency in a period from the refrigerant discharge activation operation to a start of the cooling operation or the heating operation. Operation of the compressor at the second target frequency reduces the difference in pressure between switch ports of the switching mechanism that are connected to the indoor heat exchanger and the outdoor heat exchanger. Extension of the period in which the compressor is operated at the second target frequency increases the effect of reducing the difference in pressure between the switch ports of the switching mechanism. As a result, shock noise of the switching mechanism generated when starting the heating operation or the cooling operation is reduced.

Preferably, in the air conditioner described above, the first change rate is two or more times the second change rate.

This configuration further extends the period in which the compressor is operated at the second target frequency in the period from the refrigerant discharge activation operation to a start of the cooling operation or the heating operation. As a result, shock noise of the switching mechanism generated when starting the heating operation or the cooling operation is further reduced.

An air conditioner according to the present disclosure includes a compressor in which an operating frequency is changeable, an outdoor heat exchanger, an indoor heat exchanger, and a switching mechanism configured to reversibly change a flow of a refrigerant in a refrigerant circuit between during a cooling operation and during a heating operation. When activating the compressor in accordance with a start of the cooling operation or the heating operation, the air conditioner is configured to perform a refrigerant discharge activation operation that operates the compressor at a first target frequency with the switching mechanism switched to a reverse cycle for a predetermined time and then changes the operating frequency of the compressor from the first target frequency and operates the compressor at a second target frequency that is lower than the first target frequency. When performing the refrigerant discharge activation operation, a first change rate at which the operating frequency is decreased from the first target frequency to the second target frequency is greater than a third change rate at which the operating frequency is increased to the first target frequency in the refrigerant discharge activation operation.

This configuration extends the period in which the compressor is operated at the second target frequency in a period from the refrigerant discharge activation operation to a start of the cooling operation or the heating operation. Operation of the compressor at the second target frequency reduces the difference in pressure between switch ports of the switching mechanism that are connected to the indoor heat exchanger and the outdoor heat exchanger. Extension of the period in which the compressor is operated at the second target frequency increases the effect of reducing the difference in pressure between the switch ports of the switching mechanism. As a result, shock noise of the switching mechanism generated when starting the heating operation or the cooling operation is reduced.

Preferably, in the air conditioner described above, the first change rate is two or more times the third change rate.

This configuration further extends the period in which the compressor is operated at the second target frequency in the period from the refrigerant discharge activation operation to a start of the cooling operation or the heating operation. As a result, shock noise of the switching mechanism generated when starting the heating operation or the cooling operation is further reduced.

Preferably, in the air conditioner described above, the second target frequency is greater than zero.

With this configuration, when starting the cooling operation or the heating operation, the operating frequency of the compressor is increased smoothly as compared with a configuration in which after the refrigerant discharge activation operation is completed, the compressor is temporarily stopped and then the cooling operation or the heating operation is performed. This increases the cooling performance or the heating performance when starting the cooling operation or the heating operation.

The air conditioner described above further includes an outdoor fan that generates a flow of an outdoor air passing through the outdoor heat exchanger. In the refrigerant discharge activation operation in accordance with a start of the heating operation, the outdoor fan is driven at a first rotational speed when the compressor is operated at the first target frequency, and at a second rotational speed when the compressor is operated at the second target frequency. The second rotational speed is greater than the first rotational speed.

With this configuration, when the compressor is operated at the second target frequency in the refrigerant discharge activation operation, the outdoor fan cools the outdoor heat exchanger. This increases the effect of reducing the difference in pressure between the switch ports of the switching mechanism.

The air conditioner described above further includes an expansion valve disposed in the refrigeration circuit between the outdoor heat exchanger and the indoor heat exchanger. In the refrigerant discharge activation operation, the expansion valve is driven to have a first opening degree when the compressor is operated at the first target frequency, and is driven to have a second opening degree when the compressor is operated at the second target frequency. Preferably, the second opening degree is less than the first opening degree and is greater than an opening degree of the expansion valve when starting the heating operation or the cooling operation after the refrigeration discharge activation operation is completed.

In the refrigerant discharge activation operation, when the operating frequency of the compressor is changed from the first target frequency to the second target frequency and the compressor 11 is operated, the liquid may backflow. In this regard, when changing the operating frequency of the compressor from the first target frequency to the second target frequency, the above air conditioner changes the opening degree of the expansion valve to the second opening degree, which is less than the first opening degree and is greater than the opening degree of the expansion valve corresponding to when starting the heating operation or the cooling operation after the refrigerant discharge activation operation is completed, to limit backflow of the liquid.

### BRIEF DESCRIPTION OF THE DRAWINGS

Fig. 1 is a conceptual diagram showing the present embodiment of an air conditioner.
Fig. 2 is a block diagram showing the electrical configuration of the air conditioner.
Fig. 3 is a flowchart showing the procedures of a selection control process executed by the air conditioner.
Fig. 4 is a time chart showing an example of operations of (a) a compressor, (b) a four-way switching valve, (c) an outdoor fan, and (d) an expansion valve when starting the heating operation.
Fig. 5 is a time chart showing a portion of operation of the compressor when starting the heating operation to illustrate the operation of the present embodiment.

### MODES FOR CARRYING OUT THE INVENTION

An air conditioner 1 will now be described with reference to the drawings.

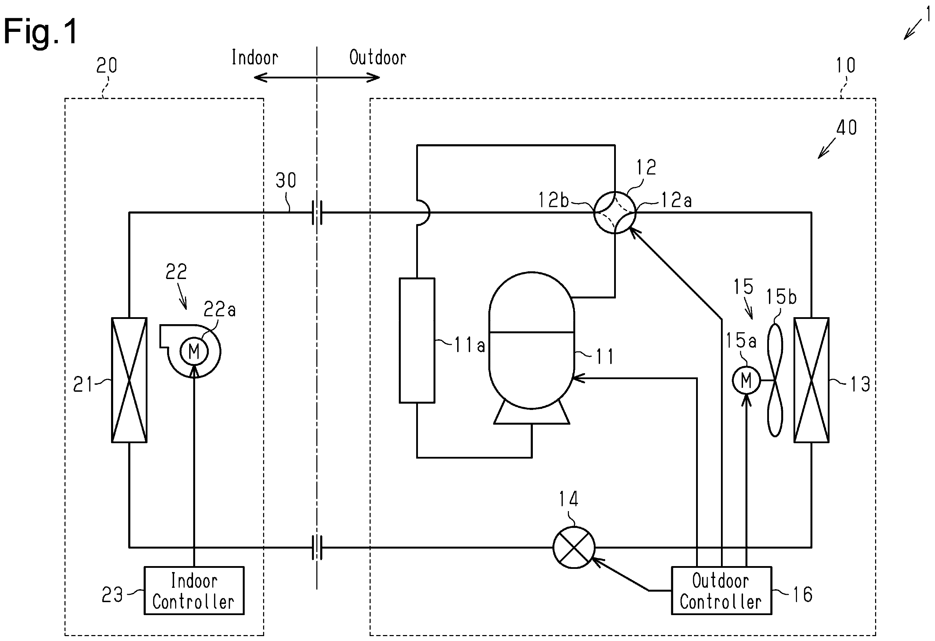

As shown in Fig. 1, the air conditioner 1 includes a refrigerant circuit 40. The refrigerant circuit 40 includes a refrigerant pipe 30 that circulates a refrigerant between an outdoor unit 10 and an indoor unit 20. The air conditioner 1 of the present embodiment includes the refrigerant circuit 40 formed by connecting the refrigerant pipe 30 to the outdoor unit 10, which is installed outdoors, and the indoor unit 20, which is a wall-installation type and is installed on an indoor wall surface or the like.

The outdoor unit 10 includes a compressor 11 in which the operating frequency is changeable, a four-way switching valve 12, which is an example of a switching mechanism, an outdoor heat exchanger 13, an expansion valve 14, an outdoor fan 15, and an outdoor controller 16. The outdoor fan 15 includes a motor 15a and an impeller 15b connected to the output shaft of the motor 15a. The motor 15a is a drive source in which the rotational speed is changeable. An example of the impeller 15b is a propeller fan.

The compressor 11 is, for example, a rocking piston compressor and includes a compression mechanism, a motor, and a crankshaft that transmits driving power of the motor to the compression mechanism (none shown). The compressor 11 includes an accumulator 11a that separates the refrigerant into gas and liquid. An example of the motor is a three-phase brushless motor. The expansion valve 14 is, for example, an electronic expansion valve in which the opening degree is changeable. The expansion valve 14 controls the flow rate of the refrigerant. The outdoor fan 15 rotates the impeller 15b using the motor 15a to facilitate heat exchange between the outdoor air and the refrigerant flowing through a heat transfer tube of the outdoor heat exchanger 13. Thus, the outdoor fan 15 generates flow of outdoor air that passes through the outdoor heat exchanger 13. The outdoor controller 16 is electrically connected to the motor of the compressor 11, the four-way switching valve 12, the expansion valve 14, and the motor 15a of the outdoor fan 15.

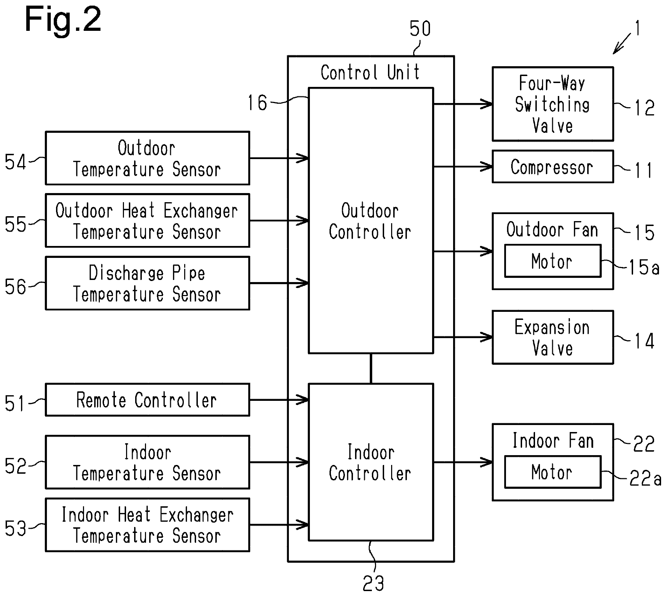

The indoor unit 20 includes an indoor heat exchanger 21, an indoor fan 22, and an indoor controller 23. The indoor fan 22 includes a motor 22a and an impeller (not shown) connected to the output shaft of the motor 22a. The motor 22a is a drive source in which rotational speed is changeable. An example of the impeller is a cross-flow fan. The indoor fan 22 rotates the impeller using the motor 22a to facilitate heat exchange between the indoor air and the refrigerant flowing through a heat transfer tube of the indoor heat exchanger 21. Thus, the indoor fan 22 generates a flow of indoor air that passes through the indoor heat exchanger 21. The indoor controller 23 is electrically connected to the motor 22a of the indoor fan 22. The indoor controller 23 is, for example, configured to perform wireless communication with a remote controller 51 (refer to Fig. 2) of the air conditioner 1 using infrared light or the like. The indoor controller 23 is configured to perform wired communication with the outdoor controller 16 through a signal line. The indoor controller 23 controls the indoor unit 20, and the outdoor controller 16 controls the outdoor unit 10 based on an operating instruction of the remote controller 51.

The refrigerant circuit 40 is configured by connecting the compressor 11, the four-way switching valve 12, the outdoor heat exchanger 13, the expansion valve 14, and the indoor heat exchanger 21 with the refrigerant pipe 30 as a loop. The refrigerant circuit 40 is configured to execute a vapor compression refrigeration cycle that reversibly circulates the refrigerant by switching the four-way switching valve 12.

More specifically, when the four-way switching valve 12 is switched to a cooling mode connection state (illustrated with solid lines), the refrigerant circuit 40 forms a cooling cycle in which the refrigerant circulates in the order of the compressor 11, the four-way switching valve 12, the outdoor heat exchanger 13, the expansion valve 14, the indoor heat exchanger 21, the four-way switching valve 12, and the compressor 11. As a result, the air conditioner 1 performs the cooling operation in which the outdoor heat exchanger 13 acts as a condenser and the indoor heat exchanger 21 acts as an evaporator. When the four-way switching valve 12 is switched to a heating mode connection state (illustrated with broken lines), the refrigerant circuit 40 forms a heating cycle in which the refrigerant circulates in the order of the compressor 11, the four-way switching valve 12, the indoor heat exchanger 21, the expansion valve 14, the outdoor heat exchanger 13, the four-way switching valve 12, and the compressor 11. As a result, the air conditioner 1 performs the heating operation in which the indoor heat exchanger 21 acts as a condenser and the outdoor heat exchanger 13 acts as an evaporator.

As shown in Fig. 2, a control unit 50 that controls the air conditioner 1 includes the outdoor controller 16 and the indoor controller 23. Each of the outdoor controller 16 and the indoor controller 23 includes, for example, a storage device and an arithmetic processing device that executes a predetermined control program. The arithmetic processing device includes, for example, a central processing unit (CPU) or a micro processing unit (MPU). The storage device stores various control programs and information used for various control processes. The storage device includes, for example, a nonvolatile memory and a volatile memory.

The control unit 50 is connected to the remote controller 51, an indoor temperature sensor 52, an indoor heat exchanger temperature sensor 53, an outdoor temperature sensor 54, an outdoor heat exchanger temperature sensor 55, and a discharge pipe temperature sensor 56 so that communication is performed.

More specifically, the remote controller 51 is connected to the indoor controller 23 so that communication is performed. More specifically, the remote controller 51 transmits a signal of an operating instruction (heating operation, cooling operation, etc.) or a deactivating instruction to the indoor controller 23. The indoor temperature sensor 52 and the indoor heat exchanger temperature sensor 53 are electrically connected to the indoor controller 23. The indoor temperature sensor 52 is used to measure the temperature of the indoor air and is disposed, for example, in the vicinity of an inlet of the indoor unit 20 (refer to Fig. 1). The indoor temperature sensor 52 transmits a signal corresponding to the indoor temperature to the indoor controller 23. The indoor heat exchanger temperature sensor 53 is used to measure the temperature of the refrigerant flowing through a particular position of the indoor heat exchanger 21 (refer to Fig. 1). An example of the indoor heat exchanger temperature sensor 53 is a thermistor. The indoor heat exchanger temperature sensor 53 transmits a signal corresponding to the temperature of the refrigerant flowing through a particular position of the indoor heat exchanger 21 to the indoor controller 23.

The outdoor temperature sensor 54, the outdoor heat exchanger temperature sensor 55, and the discharge pipe temperature sensor 56 are electrically connected to the outdoor controller 16. The outdoor temperature sensor 54 is used to measure the temperature of the outdoor air and is disposed, for example, in the vicinity of an inlet of the outdoor unit 10 (refer to Fig. 1). The outdoor temperature sensor 54 transmits a signal corresponding to the temperature of the outdoor air to the outdoor controller 16. The outdoor heat exchanger temperature sensor 55 is used to measure the temperature of the refrigerant flowing through a particular position of the outdoor heat exchanger 13 (refer to Fig. 1). An example of the outdoor heat exchanger temperature sensor 55 is a thermistor. The outdoor heat exchanger temperature sensor 55 transmits a signal corresponding to the temperature of the refrigerant flowing through a particular position of the outdoor heat exchanger 13 to the outdoor controller 16. The discharge pipe temperature sensor 56 is used to measure the temperature of a discharge pipe (not shown) of the compressor 11, that is, the temperature of the refrigerant compressed in the compressor 11. The discharge pipe temperature sensor 56 is attached to the discharge pipe of the compressor 11. The discharge pipe temperature sensor 56 transmits a signal corresponding to the temperature of the refrigerant compressed in the compressor 11 to the outdoor controller 16. As described above, the control unit 50 receives various signals (operating instruction and measurement information) from the remote controller 51, the indoor temperature sensor 52, the indoor heat exchanger temperature sensor 53, the outdoor temperature sensor 54, the outdoor heat exchanger temperature sensor 55, and the discharge pipe temperature sensor 56. The control unit 50 obtains the temperature of the indoor air (hereafter, referred to as "indoor temperature DA") based on measurement information of the indoor temperature sensor 52 and obtains a refrigerant temperature DC of the indoor heat exchanger 21 based on measurement information of the indoor heat exchanger temperature sensor 53. The control unit 50 also obtains the temperature of the outdoor air (hereafter, referred to as "outdoor temperature DOA") based on measurement information of the outdoor temperature sensor 54, obtains a refrigerant temperature DE of the outdoor heat exchanger 13 based on measurement information of the outdoor heat exchanger temperature sensor 55, and obtains a temperature DF of the discharge pipe of the compressor 11 based on measurement information of the discharge pipe temperature sensor 56.

Since the indoor controller 23 is electrically connected to the outdoor controller 16, the deactivating instruction, the indoor temperature DA, and the refrigerant temperature DC of the indoor heat exchanger 21, which are received by the indoor controller 23, may be transmitted to the outdoor controller 16. Also, the outdoor temperature DOA, the refrigerant temperature DE of the outdoor heat exchanger 13, and the temperature DF of the discharge pipe of the compressor 11, which are received by the outdoor controller 16, may be transmitted to the indoor controller 23.

The indoor controller 23 controls the rotational speed of the motor 22a of the indoor fan 22 based on an operating instruction of the remote controller 51 and measurement information.

The outdoor controller 16 controls the operating frequency of the compressor 11, the switching of the four-way switching valve 12 between the cooling mode connection state and the heating mode connection state, the opening degree of the expansion valve 14, and the rotational speed of the motor 15a of the outdoor fan 15 based on an operating instruction of the remote controller 51 and measurement information.

The control unit 50 executes the cooling operation and the heating operation through the indoor controller 23 and the outdoor controller 16 based on an operating instruction of the remote controller 51 and measurement information. In the cooling operation and the heating operation, the control unit 50 controls the compressor 11, the expansion valve 14, the outdoor fan 15, and the indoor fan 22 so that the indoor temperature reaches the temperature set by the remote controller 51.

In addition, when starting the cooling operation or the heating operation and activating the compressor 11, the control unit 50 increases the operating frequency of the compressor 11 to an operating frequency necessary for the heating operation or the cooling operation (hereafter, referred to as "necessary operating frequency FX"). In this case, the control unit 50 executes compressor protection control when activating the compressor 11. In the compressor protection control, the operating frequency of the compressor 11 is gradually increased to the necessary operating frequency FX in order to avoid troubles with the compressor 11. Examples of troubles with the compressor 11, caused by sudden increases in the operating frequency of the compressor 11 when activating the compressor 11, include a rise in the degree of dilution caused by a lowered surface of oil in the compressor 11 or a returned refrigerant, backflow of liquid to the compressor 11, freezing of the outdoor heat exchanger 13 and the indoor heat exchanger 21 used as evaporators, and negative pressure of the suction side of the compressor 11.

In the compressor protection control, the operating frequency of the compressor 11 reaches multiple target frequencies in a stepped manner before reaching the necessary operating frequency FX so that the operating frequency of the compressor 11 is gradually increased. More specifically, the control unit 50 increases the operating frequency of the compressor 11 to a first target frequency and maintains the first target frequency for a predetermined time. Then, the control unit 50 increases the operating frequency of the compressor 11 from the first target frequency to a second target frequency that is greater than the first target frequency and maintains the second target frequency for a predetermined time. The control unit 50 repeats such control a number of times to gradually increase the operating frequency of the compressor 11 to the necessary operating frequency FX.

In the cooling operation, the heating operation, and the compressor protection control, the control unit 50 sets an increase rate at which the operating frequency of the compressor 11 is increased and a decrease rate at which the operating frequency is decreased so that the increase rate is equal to the decrease rate. An example of the increase rate and the decrease rate, which is a change rate (second change rate) of the operating frequency of the compressor 11 in the cooling operation, the heating operation, and the compressor protection control, is 2 Hz per second.

When the operation of the air conditioner 1 is stopped, the refrigerant condenses and accumulates at a side corresponding to the lower one of the indoor air temperature and the outdoor air temperature. For example, when the temperature of the outdoor air is lower than the temperature of the indoor air, a stagnation phenomenon is generated, that is, the liquid refrigerant dissolves and accumulates in the lubricant oil of the compressor 11 or the liquid refrigerant accumulates in the outdoor heat exchanger 13. When the stagnation phenomenon is generated and the compressor 11 is activated in the heating operation, if the increase rate of the operating frequency of the compressor 11 is increased in the compressor protection control, generation of oil foaming in the compressor 11 is facilitated. This causes a failure of the compressor 11. Therefore, when the stagnation phenomenon may be generated, a typical configuration limits the increase rate of the operating frequency of the compressor 11 in the compressor protection control and operates the compressor 11 to limit generation of oil foaming in the compressor 11. This hinders improvement of the heating performance and extends the time from when the heating operation is started until the indoor temperature DA reaches the set temperature.

In this regard, the control unit 50 executes a refrigerant discharge activation operation to avoid a failure of the compressor 11 caused by the stagnation phenomenon during the heating operation. In the refrigerant discharge activation operation, when activating the compressor 11 in accordance with a start of the heating operation, the control unit 50 operates the compressor 11 with the four-way switching valve 12 switched to the reverse cycle (cooling mode connection state) for a predetermined time (e.g., one minute). This allows the liquid refrigerant accumulated in the outdoor heat exchanger 13 to flow to the indoor heat exchanger 21. In the refrigerant discharge activation operation, the liquid refrigerant in the indoor heat exchanger 21 is evaporated by the indoor heat exchanger 21 and becomes gas refrigerant. The gas refrigerant is drawn into the compressor 11. This limits generation of oil foaming in the compressor 11. Accordingly, the number of target frequencies used in the compressor protection control so that the operating frequency of the compressor 11 reaches the necessary operating frequency FX may be reduced. More specifically, the activation speed of the compressor 11 is increased in the compressor protection control. This shortens the time for the operating frequency of the compressor 11 to reach the necessary operating frequency FX and improves the heating performance. As a result, the time from when the refrigerant discharge activation operation is started to when the indoor temperature DA reaches the set temperature is less than the time from when a typical heating operation is started to when the indoor temperature DA reaches the set temperature.

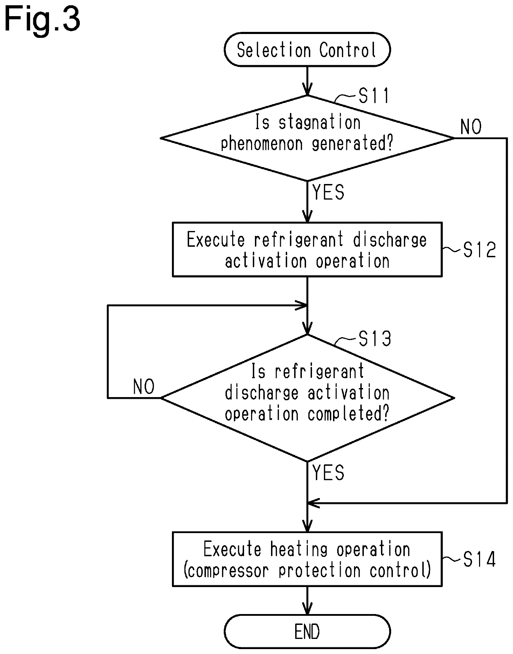

When the stagnation phenomenon is not generated, oil foaming will not be generated in the compressor 11. Therefore, the air conditioner 1 does not have to perform the refrigerant discharge activation operation. The control unit 50 executes selection control that selects whether or not to perform the refrigerant discharge activation operation when starting the heating operation. Fig. 3 is a flowchart of the selection control.

As shown in Fig. 3, in step S11, the control unit 50 determines whether or not the stagnation phenomenon is generated. In step S11, if all of the following determination conditions, conditions 1 to 5, are satisfied, the control unit 50 determines that the stagnation phenomenon is generated.

Condition 1: The compressor 11 is activated in accordance with a start of the heating operation.

Condition 2: The value obtained by subtracting the refrigerant temperature DE of the outdoor heat exchanger 13 from the refrigerant temperature DC of the indoor heat exchanger 21 is greater than a temperature threshold value XT (DC - DE > XT).

Condition 3: The temperature DF of the discharge pipe of the compressor 11 is greater than the temperature obtained by adding a correction deviation CRDW to the outdoor temperature DOA (DF > DOA + CRDW).

Condition 4: The outdoor temperature DOA is greater than a lower limit value DOAL of a predetermined outdoor temperature range and is less than or equal to an upper limit value DOAH of the outdoor temperature range (DOAL < DOA ≤ DOAH).

Condition 5: The indoor temperature DA is less than an indoor temperature threshold value DAX (DA < DAX).

In condition 2, the temperature threshold value XT is a difference in the temperature between the refrigerant temperature DC of the indoor heat exchanger 21 and the refrigerant temperature DE of the outdoor heat exchanger 13 used to perform the refrigerant discharge activation operation and is set in advance through tests or the like. An example of the temperature threshold value XT is 10°C. In condition 3, the correction deviation CRDW is a corrected value used to determine a stagnation activation. An example of the correction deviation CRDW is 3°C. In condition 4, the lower limit value DOAL of the outdoor temperature range is the lower limit value of outdoor air temperatures used to perform the refrigerant discharge activation operation. The upper limit value DOAH of the outdoor temperature range is the upper limit value of the outdoor air temperatures used to perform the refrigerant discharge activation operation. An example of the lower limit value DOAL is -20°C. An example of the upper limit value DOAH is 2°C. In condition 5, the indoor temperature threshold value DAX is the upper limit value of indoor air temperatures used to perform the refrigerant discharge activation operation. An example of the indoor temperature threshold value DAX is 12°C.

When determining in step S11 that the stagnation phenomenon is generated (step S11: YES), the control unit 50 executes the refrigerant discharge activation operation in step S12. In step S13, the control unit 50 determines whether or not the refrigerant discharge activation operation has completed. The control unit 50 determines whether or not the refrigerant discharge activation operation has completed, for example, based on a timer disposed on the control unit 50. More specifically, the control unit 50 starts to count the timer when the refrigerant discharge activation operation is started. If the count of the timer is greater than or equal to a threshold value, the control unit 50 determines that the refrigerant discharge activation operation has completed. When determining in step S13 that the refrigerant discharge activation operation has completed (step S13: YES), the control unit 50 executes the heating operation (compressor protection control) in step S14. When determining in step S13 that the refrigerant discharge activation operation has not completed (step S13: NO), the control unit 50 again proceeds to the determination of step S13.

When determining in step S11 that the stagnation phenomenon is not generated (step S11: NO), the control unit 50 proceeds to step S14 and executes the heating operation (compressor protection control). That is, when the stagnation phenomenon is not generated, the control unit 50 does not execute the refrigerant discharge activation operation.

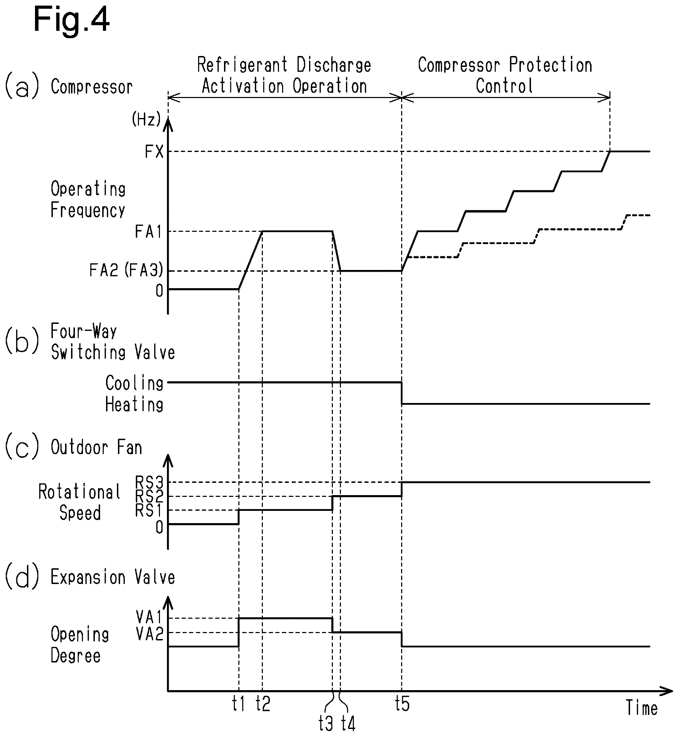

The refrigerant discharge activation operation will now be described in detail using the time chart shown in Fig. 4. In the description hereafter, components of the air conditioner 1 given with reference characters indicate the components of the air conditioner 1 shown in Fig. 1 or 2.

In the refrigerant discharge activation operation, the control unit 50 controls the compressor 11, the four-way switching valve 12, the outdoor fan 15, and the expansion valve 14. Before the refrigerant discharge activation operation is started, the operating frequency of the compressor 11 is zero, the rotational speed of the motor 15a of the outdoor fan 15 is zero, and the opening degree of the expansion valve 14 is the opening degree (hereafter, referred to as the reference opening degree) of the expansion valve 14 in the cooling operation and the heating operation.

At time t1, when the refrigerant discharge activation operation is started, the control unit 50 switches the connection state of the four-way switching valve 12 to the cooling mode connection state, which is the connection state of the cooling operation. If the connection state of the four-way switching valve 12 is already the cooling mode connection state, the four-way switching valve 12 is controlled to maintain the cooling mode connection state. In addition, the control unit 50 sets the operating frequency of the compressor 11 to a first target frequency FA1 and activates the compressor 11. The first target frequency FA1 is an operating frequency of the compressor 11 necessary for ensuring a flow of the refrigerant to discharge the liquid refrigerant from the outdoor heat exchanger 13. The first target frequency FA1 is set in advance through tests or the like. The first target frequency FA1 is a value less than the operating frequency of the compressor 11 in the heating operation. An example of the first target frequency FA1 is 46 Hz. The control unit 50 also drives the expansion valve 14 so that the opening degree of the expansion valve 14 becomes a first opening degree VA1. The control unit 50 also drives the motor 15a of the outdoor fan 15 so that the rotational speed becomes a first rotational speed RS1. An example of the first rotational speed RS1 is substantially zero.

From time t1 to time t2, the operating frequency of the compressor 11 is increased. At time t2, the operating frequency of the compressor 11 reaches the first target frequency FA1. The control unit 50 sets the change rate (third change rate) at which the operating frequency of the compressor 11 is increased to the first target frequency FA1 to, for example, 2 Hz per second. During the period from time t2 to time t3, the control unit 50 maintains the operating frequency of the compressor 11 at the first target frequency FA1. In the period from time t1 to time t3, the compressor 11 is operated, so that the liquid refrigerant is discharged from the outdoor heat exchanger 13 and flows toward the indoor heat exchanger 21.

At time t3, the control unit 50 changes the operating frequency of the compressor 11 from the first target frequency FA1 to a second target frequency FA2. The second target frequency FA2 is an operating frequency at which the compressor 11 is operated in order to cancel the difference in pressure between a switch port 12a of the four-way switching valve 12 that is connected to the outdoor heat exchanger 13 and a switch port 12b of the four-way switching valve 12 that is connected to the indoor heat exchanger 21. The second target frequency FA2 is a value greater than 0 Hz and less than the first target frequency FA1. The second target frequency FA2 is set in advance through tests or the like. An example of the second target frequency FA2 is 16 Hz. The control unit 50 also drives the motor 15a of the outdoor fan 15 so that the rotational speed changes from the first rotational speed RS1 to a second rotational speed RS2. The second rotational speed RS2 is a rotational speed greater than the first rotational speed RS1 and is set in advance through tests or the like. An example of the second rotational speed RS2 is 600 rpm. The motor 15a of the outdoor fan 15 is driven at the second rotational speed RS2 to direct the outdoor air to the outdoor heat exchanger 13 and cool the outdoor heat exchanger 13. This accelerates reduction in the pressure difference between the switch ports 12a and 12b of the four-way switching valve 12 to equalize the pressure. The control unit 50 also drives the expansion valve 14 so that the opening degree of the expansion valve 14 changes from the first opening degree VA1 to a second opening degree VA2. The second opening degree VA2 is less than the first opening degree VA1 and greater than the reference opening degree and is set in advance through tests or the like. An example of the second opening degree VA2 is substantially one-half of the first opening degree VA1 or less than or equal to one-half of the first opening degree VA1.

In the period from time t3 to time t4, the operating frequency of the compressor 11 is decreased. The control unit 50 sets the change rate (first change rate) at which the operating frequency of the compressor 11 is decreased from the first target frequency FA1 to the second target frequency FA2 to be greater than the second change rate. Preferably, the first change rate is two or more times the second change rate. More preferably, the first change rate is five or more times the second change rate. The control unit 50 also sets the first change rate to be greater than the third change rate. Preferably, the first change rate is two or more times the third change rate. More preferably, the first change rate is five or more times the third change rate. In the present embodiment, the control unit 50 sets the first change rate to, for example, 10 Hz per second. In the period from time t4 to time t5, the control unit 50 maintains the operating frequency of the compressor 11 at the second target frequency FA2.

At time t5, the control unit 50 switches the four-way switching valve 12 to the heating mode connection state. The control unit 50 also changes the operating frequency of the compressor 11 from the second target frequency FA2 to a third target frequency FA3. For example, the third target frequency FA3 is equal to the first target frequency FA1. Subsequently, the control unit 50 executes the compressor protection control to increase the operating frequency of the compressor 11 from the third target frequency FA3 to the necessary operating frequency FX in a stepped manner as indicated by the solid line in Fig. 4.

At time t5, the control unit 50 also drives the motor 15a of the outdoor fan 15 so that the rotational speed of the motor 15a changes from the second rotational speed RS2 to a third rotational speed RS3. The third rotational speed RS3 is a reference rotational speed in the heating operation and is set in advance through tests or the like. The control unit 50 also drives the expansion valve 14 so that the opening degree of the expansion valve 14 becomes the reference opening degree. As described above, the heating operation is started at time t5.

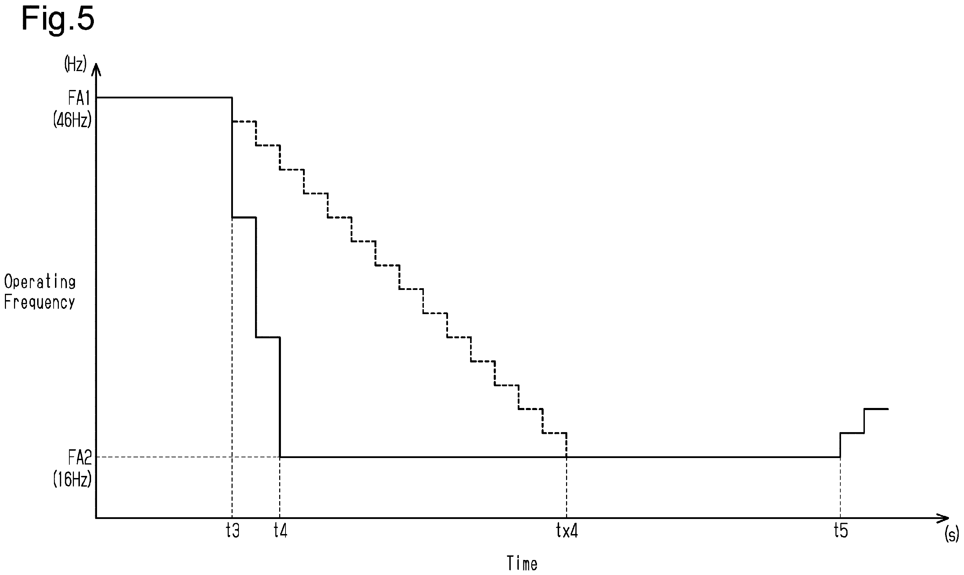

The operation of the present embodiment will now be described with reference to Figs. 1 and 5 as compared with a comparative example of a comparative air conditioner. The comparative air conditioner controls a compressor so that the change rate at which the compressor is changed from the first target frequency FA1 to the second target frequency FA2 is equal to the second change rate (2 Hz per second) of the operating frequency of the compressor in the heating operation and the third change rate (2 Hz per second), which is the increase rate of the operating frequency of the compressor 11 in the refrigerant discharge activation operation. In the graph shown in Fig. 5, the broken line indicates changes in the operating frequency of the compressor of the comparative air conditioner from the first target frequency FA1 to the second target frequency FA2.

In the air conditioner 1, before starting the heating operation, the four-way switching valve 12 is switched to the cooling mode connection state (state indicated the solid lines in Fig. 1) to perform a refrigerant discharge activation operation. The compressor 11 is operated with the four-way switching valve 12 switched to the cooling mode connection state. As a result, a difference in pressure is generated between the switch ports 12a and 12b of the four-way switching valve 12.

When the connection state of the four-way switching valve 12 is changed from the cooling mode connection state to the heating mode connection state (state indicated by broken lines in Fig. 1) without cancelling the difference in pressure between the switch ports 12a and 12b of the four-way switching valve 12, the difference in pressure between the switch ports 12a and 12b of the four-way switching valve 12 causes impact noise (shock noise) to be generated by an impact when connecting the high-pressure port and the low-pressure port of the four-way switching valve 12. Therefore, when changing the connection state of the four-way switching valve from the cooling mode connection state to the heating mode connection state, the difference in pressure between the switch ports 12a and 12b of the four-way switching valve 12 needs to be canceled.

For this reason, the control unit 50 operates the compressor 11 for the predetermined time while maintaining the operating frequency of the compressor 11 at the second target frequency FA2 (16 Hz) to cancel the difference in pressure between the switch ports 12a and 12b of the four-way switching valve 12. In this case, in the compressor of the comparative air conditioner, the change rate from the first target frequency FA1 to the second target frequency FA2 is equal to the second change rate (2 Hz per second) and the third change rate (2 Hz per second). This extends the time (time t3 to time tx4) taken to change from the first target frequency FA1 to the second target frequency FA2. Consequently, the time (time tx4 to time t5) from when the operating frequency is changed to the second target frequency FA2 to when the heating operation is started is shortened. In other words, the time for canceling the difference in pressure between the switch ports 12a and 12b of the four-way switching valve 12 is shortened. As a result, the difference in pressure between the switch ports 12a and 12b of the four-way switching valve 12 cannot be sufficiently reduced. Hence, when the connection state of the four-way switching valve 12 is changed from the cooling mode connection state to the heating mode connection state, shock noise cannot be sufficiently reduced.

The compressor of the comparative air conditioner may be operated at the second target frequency FA2 for a longer period of time, that is, the point in time at which the heating operation is started is delayed, to sufficiently reduce the difference in pressure between the switch ports 12a and 12b of the four-way switching valve 12. However, this extends the time the temperature of the indoor air takes to reach the set temperature from when the remote controller 51 issues an instruction to perform the heating operation.

In contrast, in the present embodiment, as indicated by the solid line in Fig. 5, the control unit 50 sets the change rate (the first change rate) at which the operating frequency of the compressor 11 is decreased from the first target frequency FA1 to the second target frequency FA2 in the refrigerant discharge activation operation to be greater than the change rate (second change rate) of the operating speed of the compressor 11 in the heating operation and the increase rate (third change rate) of the operating frequency of the compressor 11 in the refrigerant discharge activation operation. More specifically, the operating frequency of the compressor 11 is quickly changed from the first target frequency FA1 to the second target frequency FA2 to extend the period (time t3 to time t4) in which the compressor 11 is operated with the operating frequency of the compressor 11 maintained at the second target frequency FA2. This ensures sufficient time for canceling the difference in pressure between the switch ports 12a and 12b of the four-way switching valve 12 while limiting extension of the period from when the refrigerant discharge activation operation is started to when the compressor protection control is started.

The present embodiment has the following advantages.
(1) The first change rate from the first target frequency FA1 to the second target frequency FA2 in the refrigerant discharge activation operation is greater than the second change rate, which is the change rate of the operating frequency of the compressor in the heating operation. Thus, the period in which the compressor 11 is operated at the second target frequency FA2 extends in a period from when the refrigerant discharge activation operation is started to when the heating operation is started. Operation of the compressor 11 at the second target frequency FA2 reduces the difference in pressure between the switch ports 12a and 12b of the four-way switching valve 12. Therefore, extension of the period in which the compressor 11 is operated at the second target frequency FA2 increases the effect of reducing the difference in pressure between the switch ports 12a and 12b of the four-way switching valve 12. This reduces shock noise of the four-way switching valve 12 generated when starting the heating operation.
(2) When the first change rate is two or more times the second change rate, the compressor 11 is operated at the second target frequency FA2 for a longer time in the period from when the refrigerant discharge activation operation is started to when the heating operation (compressor protection control) is started. This further reduces shock noise of the four-way switching valve 12 generated when starting the heating operation (compressor protection control).
   In the present embodiment, the first change rate is five times the second change rate. The compressor 11 is operated at the second target frequency FA2 for an even longer time in the period from when the refrigerant discharge activation operation is started to when the heating operation is started. This further reduces shock noise of the four-way switching valve 12 generated when starting the heating operation (compressor protection control).
(3) The first change rate from the first target frequency FA1 to the second target frequency FA2 in the refrigerant discharge activation operation is greater than the third change rate, which is the increase rate of the operating frequency of the compressor in the refrigerant discharge activation operation. Thus, the period in which the compressor 11 is operated at the second target frequency FA2 extends in a period from when the refrigerant discharge activation operation is started to when the heating operation (compressor protection control) is started. Operation of the compressor 11 at the second target frequency FA2 reduces the difference in pressure between the switch ports 12a and 12b of the four-way switching valve 12. Therefore, extension of the period in which the compressor 11 is operated at the second target frequency FA2 increases the effect of reducing the difference in pressure between the switch ports 12a and 12b of the four-way switching valve 12. This reduces shock noise of the four-way switching valve 12 generated when starting the heating operation.
(4) When the first change rate is two or more times the third change rate, the compressor 11 is operated at the second target frequency FA2 for a longer time in the period from when the refrigerant discharge activation operation is started to when the heating operation (compressor protection control) is started. This further reduces shock noise of the four-way switching valve 12 generated when starting the heating operation.
   In the present embodiment, the first change rate is five times the second change rate. Hence, the compressor 11 is operated at the second target frequency FA2 for an even longer time in the period from when the refrigerant discharge activation operation is started to when the heating operation (compressor protection control) is started. This further reduces shock noise of the four-way switching valve 12 generated when starting the heating operation (compressor protection control).
(5) In the refrigerant discharge activation operation, the compressor 11 is operated at the second target frequency FA2 that is greater than zero. When starting the heating operation, the operating frequency of the compressor 11 is increased smoothly as compared with a configuration in which the heating operation is operated after the compressor 11 is temporarily stopped after completion of the refrigerant discharge activation operation. This increases the heating performance when starting the heating operation.
(6) In the refrigerant discharge activation operation, in the period in which the compressor 11 is operated at the second target frequency FA2, the outdoor fan 15 is driven at the second rotational speed RS2 that is greater than the first rotational speed RS1 to cool the outdoor heat exchanger 13. This increases the effect of reducing the difference in pressure between the switch ports of the four-way switching valve 12.
(7) In the refrigerant discharge activation operation, when the operating frequency of the compressor 11 is changed from the first target frequency FA1 to the second target frequency FA2 and the compressor 11 is operated, if the opening degree of the expansion valve 14 remains at the first opening degree VA1, the liquid may backflow. In contrast, according to the present embodiment, when the compressor 11 is operated at the second target frequency FA2, the opening degree of the expansion valve 14 is changed to the second opening degree VA2, which is less than the first opening degree VA1 and greater than the reference opening degree. This limits the backflow of liquid.
(8) The refrigerant discharge activation operation eliminates the stagnation phenomenon. This shortens the time the operating frequency of the compressor 11 takes to reach the necessary operating frequency FX in the compressor protection control, that is, the execution period of the compressor protection control. That is, the operating frequency of the compressor 11 is increased quickly in the compressor protection control. More specifically, as indicated by the broken line shown in (a) of Fig. 4, when the refrigerant discharge activation operation is not performed, to avoid troubles with the compressor 11 caused by the stagnation phenomenon, the compressor protection control increases the number of target frequencies used for the operating frequency of the compressor 11 to reach the necessary operating frequency FX in a stepped manner. This extends the execution period of the compressor protection control. In the present embodiment, as indicated by the solid line shown in (a) of Fig. 4, since the stagnation phenomenon is eliminated, the compressor protection control uses a fewer number of target frequencies for the operating frequency of the compressor 11 to reach the necessary operating frequency FX in a stepped manner. In addition, each target frequency is maintained for a shorter time. Therefore, even when the refrigerant discharge activation operation is performed, the time the operating frequency of the compressor 11 takes to reach the necessary operating frequency FX in the compressor protection control is shorter than the time the operating frequency of the compressor 11 takes to reach the necessary operating frequency FX in the compressor protection control without performing the refrigerant discharge activation operation. This increases the heating performance when starting the heating operation.
(9) When determining in the selection control that the stagnation phenomenon is not generated, the control unit 50 starts the heating operation (compressor protection control). Thus, when the stagnation phenomenon is not generated in the selection control, the refrigerant discharge activation operation may be omitted and the heating operation (compressor protection control) may be performed. As a result, the indoor temperature DA reaches the set temperature more quickly.
   In this case, in the compressor protection control, the operating frequency of the compressor 11 is increased as indicated by the solid line shown in (a) of Fig. 4. Thus, the execution period of the compressor protection control is shortened, thereby increasing the heating performance when starting the heating operation.
(10) The operating frequency of the compressor 11 (first target frequency FA1) used in the refrigerant discharge activation operation is lower than the operating frequency (necessary operating frequency FX), which is the operating frequency of the compressor 11 that has increased in the heating operation. This shortens the time the compressor 11 takes to change from the first target frequency FA1 to the second target frequency FA2. More specifically, the period in which the compressor 11 is operated at the second target frequency FA2 extends in the period from when the refrigerant discharge activation operation is started to when the heating operation (compressor protection control) is started. This reduces shock noise of the four-way switching valve 12 generated when starting the heating operation (compressor protection control).

### Modified Examples

The description related to the above embodiment exemplifies, without any intention to limit, applicable forms of an air conditioner according to the present disclosure. In addition to the embodiment described above, the air conditioner according to present disclosure is applicable to, for example, modified examples of the above embodiment that are described below and combinations of at least two of the modified examples that do not contradict each other.

In the embodiment, the control unit 50 may execute the selection control when the remote controller 51 issues an instruction to perform the cooling operation. In this case, in step S14 of the selection control, the cooling operation is performed instead of the heating operation.

When the operation of the air conditioner 1 is stopped, the refrigerant condenses and accumulates at a side corresponding to the lower one of the indoor air temperature and the outdoor air temperature. When the temperature of the indoor air is lower than the temperature of the outdoor air, the liquid refrigerant accumulates in the indoor heat exchanger 21. When the compressor 11 is driven in this state, the liquid refrigerant flows from the indoor heat exchanger 21 into the compressor 11 through the accumulator 11a. As a result, oil foaming may be generated in the compressor 11. In this regard, when activating the compressor 11 in accordance with a start of the cooling operation (compressor protection control), the air conditioner 1 performs the refrigerant discharge activation operation. In this case, the control unit 50 sets the four-way switching valve 12 to the heating mode connection state, which is the reverse cycle of the cooling operation. As a result, the liquid refrigerant is discharged from the indoor heat exchanger 21 and flows toward the outdoor heat exchanger 13.

The refrigerant discharge activation operation performed when activating the compressor 11 in accordance with a start of the cooling operation is the same as the refrigerant discharge activation operation performed when starting the heating operation, except that the four-way switching valve 12 is switched to the heating mode connection state and that the rotational speed of the motor 22a of the indoor fan 22, instead of the outdoor fan 15, is changed in the same manner as the rotational speed of the motor 15a of the outdoor fan 15. More specifically, the operating frequency of the compressor 11 is changed in the same manner in the refrigerant discharge activation operation that is performed when starting the cooling operation and the refrigerant discharge activation operation that is performed when starting the heating operation. In the refrigerant discharge activation operation performed when starting the cooling operation, the control unit 50 controls the compressor 11 so that the change rate (the second change rate) at which the operating frequency of the compressor 11 is decreased from the first target frequency FA1 to the second target frequency FA2 is greater than the first change rate and the third change rate.

In the selection control of the embodiment, the conditions for determining whether or not the stagnation phenomenon is generated (step S11) may be changed as follows.
[A] Conditions 6 to 8 may be used instead of conditions 4 and 5.
   Condition 6: The outdoor temperature DOA is greater than the upper limit value DOAH of the outdoor temperature range (DOA > DOAH).
   Condition 7: The value obtained by subtracting the outdoor temperature DOA from the indoor temperature DA is greater than a predetermined temperature difference threshold value DDX (DA-DOA > DDX).
   Condition 8: The indoor temperature DA is less than the indoor temperature threshold value DAX (DA < DAX).
      The temperature difference threshold value DDX is a difference in temperature between the indoor air and the outdoor air that is assumed that the stagnation phenomenon is highly likely to be generated. The temperature difference threshold value DDX is set in advance through tests or the like. An example of the temperature difference threshold value DDX is 5°C. An example of the indoor temperature threshold value DAX is 12°C.
[B] At least one of condition 2 or 3 may be omitted.
[C] At least one of condition 4 or 5 may be omitted.

In the embodiment, the selection control may be omitted. In this case, the control unit 50 executes the refrigerant discharge activation operation when the remote controller 51 issues an instruction to perform the heating operation or the cooling operation.

In the embodiment, the four-way switching valve 12 is illustrated as a switching mechanism. However, the switching mechanism is not limited to the four-way switching valve 12. A switching mechanism other than a four-way switching valve may be used as long as the switching mechanism is used to switch between the refrigerant discharge activation operation and the heating operation or the cooling operation and needs pressure equalization between the ports connected to the outlet and the inlet of the compressor 11 to reduce shock noise when switching between these operations.

In the embodiment, the control unit 50 controls the compressor 11 so that the operating frequency of the compressor 11 is maintained at the second target frequency FA2 in the period from time t3 to time t4 shown in Fig. 4. However, the operating frequency of the compressor 11 may be changed in this period as long as the difference in pressure between the switch ports 12a and 12b of the four-way switching valve 12 is canceled.

In the embodiment, one of the outdoor controller 16 and the indoor controller 23 may be omitted. For example, when the indoor controller 23 is omitted, the indoor temperature sensor 52 and the indoor heat exchanger temperature sensor 53 are connected to the outdoor controller 16 by wire or through wireless communication. In addition, the indoor fan 22 is connected to the outdoor controller 16 by wire.

While the embodiment has been described herein above, it is to be appreciated that various changes in form and detail may be made without departing from the spirit and scope presently or hereafter claimed.

## Claims

1. An air conditioner (1), comprising:
a compressor (11) in which an operating frequency is changeable;
an outdoor heat exchanger (13);
an indoor heat exchanger (21); and
a switching mechanism (12) configured to reversibly change a flow of a refrigerant in a refrigerant circuit (40) between during a cooling operation and during a heating operation, wherein
when activating the compressor (11) in accordance with a start of the cooling operation or the heating operation, the air conditioner (1) is configured to perform a refrigerant discharge activation operation that operates the compressor (11) at a first target frequency (FA1) with the switching mechanism (12) switched to a reverse cycle for a predetermined time and then changes the operating frequency of the compressor (11) from the first target frequency (FA1) and operates the compressor (11) at a second target frequency (FA2) that is lower than the first target frequency (FA1), and
when performing the refrigerant discharge activation operation, a first change rate at which the operating frequency is decreased from the first target frequency (FA1) to the second target frequency (FA2) is greater than a second change rate at which the operating frequency of the compressor (11) is decreased in the cooling operation or the heating operation.

2. The air conditioner according to claim 1, wherein the first change rate is two or more times the second change rate.

3. An air conditioner (1), comprising:
a compressor (11) in which an operating frequency is changeable;
an outdoor heat exchanger (13);
an indoor heat exchanger (21); and
a switching mechanism (12) configured to reversibly change a flow of a refrigerant in a refrigerant circuit (40) between during a cooling operation and during a heating operation, wherein
when activating the compressor (11) in accordance with a start of the cooling operation or the heating operation, the air conditioner (1) is configured to perform a refrigerant discharge activation operation that operates the compressor (11) at a first target frequency (FA1) with the switching mechanism (12) switched to a reverse cycle for a predetermined time and then changes the operating frequency of the compressor (11) from the first target frequency (FA1) and operates the compressor (11) at a second target frequency (FA2) that is lower than the first target frequency (FA1), and
when performing the refrigerant discharge activation operation, a first change rate at which the operating frequency is decreased from the first target frequency (FA1) to the second target frequency (FA2) is greater than a third change rate at which the operating frequency is increased to the first target frequency (FA1) in the refrigerant discharge activation operation.

4. The air conditioner according to claim 3, wherein the first change rate is two or more times the third change rate.

5. The air conditioner according to any one of claims 1 to 4, wherein the second target frequency is greater than zero.

6. The air conditioner (1) according to any one of claims 1 to 5, further comprising:
an outdoor fan (15) that generates a flow of an outdoor air passing through the outdoor heat exchanger (13), wherein
in the refrigerant discharge activation operation in accordance with a start of the heating operation, the outdoor fan (15) is driven at a first rotational speed (RS1) when the compressor (11) is operated at the first target frequency (FA1), and at a second rotational speed (RS2) when the compressor (11) is operated at the second target frequency (FA2), and
the second rotational speed (RS2) is greater than the first rotational speed (RS1).

7. The air conditioner (1), according to any one of claims 1 to 6, further comprising:
an expansion valve (14) disposed in the refrigeration circuit (40) between the outdoor heat exchanger (13) and the indoor heat exchanger (21), wherein
in the refrigerant discharge activation operation, the expansion valve (14) is driven to have a first opening degree (VA1) when the compressor (11) is operated at the first target frequency (FA1), and is driven to have a second opening degree (VA2) when the compressor (11) is operated at the second target frequency (FA2), and
the second opening degree (VA2) is less than the first opening degree (VA1) and is greater than an opening degree of the expansion valve (14) when starting the heating operation or the cooling operation after the refrigeration discharge activation operation is completed.
